# EUROPEAN PATENT SPECIFICATION

(11) **EP 0 941 261 B1**
(45) Date of publication and mention of the grant of the patent: **25.05.2005**
(21) Application number: 97913339.4
(22) Date of filing: 25.11.1997
(51) Int. Cl.: C08F 285/00, C08F 290/00, C09J 4/06

(54) **COMPOSITION**
ZUSAMMENSETZUNG
COMPOSITION

(30) Priority: 26.11.1996 GB 9624607
(43) Date of publication of application: 15.09.1999
(73) Proprietor: National Starch and Chemical Limited, Berkshire SL1 4DF (GB)
(72) Inventor: PALMER, Sharon, Veronica, Hants SO30 3NE (GB); MAJOR, Sarah, Louise, Mary, Hampshire SO50 5JQ (GB); BALDWIN, Terence, Reginald, Hampshire SO51 7JZ (GB)
(74) Representative: Harding, Charles Thomas
(86) International application number: PCT/GB1997/003225
(87) International publication number: WO 1998/023658

(56) References cited:
- EP-A- 0 087 304
- WO-A-93/15125
- WO-A-96/32397
- GB-A- 2 284 816
- US-A- 4 846 905
- US-A- 5 034 437
- US-A- 5 326 795

## Description

The present invention relates to a composition. In particular, the present invention relates to a composition suitable for use as a coating - such as an adhesive.

EP-A-0357304 discloses a structural acrylic adhesive composition. The adhesive composition of EP-A-0357304 comprises 50 to 75% of a methacrylate ester monomer; 0-15% of an ethylenically-unsaturated polymerisable mono- or di- carboxylic acid; 10-30% of a core/shell polymer; and 5-20% of an elastomeric polymer.

An elastomer is defined as being a macromolecular material which returns rapidly to approximately its initial dimensions and shape after substantial deformation by a weak stress and release of the stress at room temperature. This definition is in accordance with the definition of "elastomer" presented in the February 1996 version of the draft European standard booklet EN 923:199X as compiled by the European Committee for Standardisation. A typical elastomer is the product Hypalon, which is supplied by DuPont.

The adhesive composition of EP-A-0357304 therefore comprises solid, high molecular weight, polymeric materials in the form of the elastomeric polymer. The presence of these solid, high molecular weight, elastomeric polymeric materials can cause problems not only in the formulation of the composition but also in the application of the composition to a surface.

EP-A-0087304 relates to non-aqueous compositions useful as or in adhesives comprising (a) acrylic and/or methacrylic monomers, (b) sequential polymer, dispersed in (a), and (c) a free radical generator.

GB-A-2284816 relates to a method for impact-modifying an unsaturated polyester comprising units derived from polycondensation of maleic anhydride and di(2-hydroxy propylether) of bisphenol-A, the method comprising (a) adding to a solution of the polyester in a vinyl aromatic monomer, preferably styrene, a multi-stage impact modifier having no reactive functionality, and (b) polymerising the vinyl aromatic monomer to form a cross-linked network.

The present invention seeks to overcome these problems.

According to a first aspect of the present invention there is provided a curable composition comprising: (a) a polymerisable monomer; (b) a core/shell polymer; and (c) a liquid polymerisable component capable of imparting toughness on the polymerisation thereof; wherein polymerisable monomer (a) is one or more (meth)acrylate monomers and/or (meth)acrylic acid; wherein polymerisable monomer (a) is different to polymerisable component (c) and wherein liquid polymerisable component (c) is an oligomer, flowable below 60°C and has a number average molecular weight of less than 10,000, and which can have one or more of the following functional sites, which may be terminal and/or pendent: -CH=CH₂ (or a substituted derivative thereof); -OH; -COOH; -SH; -Br; -NCO; -NH₂; -NR₁R₂; -CH(O)CH₂; -C(O)-C(CH₃)=CH₂; -C(O)-C(H)=CH₂; SO₂Cl and acid anhydride, wherein each of R₁ and R₂ may be the same or different and is independently selected from hydrogen; halo; hydroxy; substituted, unsubstituted, linear or branched alkyl and aryl.

According to a second aspect of the present invention there is provided a polymeric material formed from the polymerisation of a curable composition according to the present invention.

According to a third aspect of the present invention there is provided a bonded assembly comprising a first surface bonded to a second surface by a polymeric material according to the present invention.

According to a fourth aspect of the present invention there is provided a sealed assembly comprising a first surface sealed to a second surface by a polymeric material according to the present invention.

The compositions of the present invention have a number of advantages. For example, they are easier to formulate.

Unlike the compositions of the prior art - in particular those of EP-A-0357304 - the compositions of the present invention are not formulated from solid, high molecular weight, elastomeric polymeric materials. In particular, the compositions of the present invention are not formulated from elastomeric polymers that fall within the definition laid out in EP-A-0357304 and the reference book cited therein - namely "Handbook of Plastics and Elastomers" pages 1-106-119 (1975) McGraw-Hill Inc. Instead, each of the components in the formulation of the composition of the present invention is in a liquid or emulsion state. This feature makes for easier and better formulating, thereby ensuring a more homogeneous composition for application.

Likewise, since each of the components in the formulation of the composition of the present invention is in a liquid or emulsion state, so the composition is easier to apply and also results in a more even deposition (such as spread) of the composition prior to cure.

Moreover, as the composition can be applied more evenly, so the resultant cured composition is of a more homogeneous nature, thereby ensuring a better adhesion, sealing, encapsulation, coating etc.

The composition of the present invention is further advantageous in that on curing it produces a coating having a good resistance to crack propagation, as demonstrated for example in having improved impact strength.

The composition of the present invention is further advantageous in that on curing it produces a coating having a good fracture toughness. For example, the system according to the present invention has a good impact drop height as determined by the TEST PROTOCOL - 1 mentioned below. Typically, the composition of the present invention will have an impact strength of at least 5 cm, preferably at least 10 cm, preferably at least 30 cm, preferably at least 50 cm, preferably at least 60 cm, preferably at least 65 cm (as determined by the TEST PROTOCOL - 1) depending on the particular needs for the adhesive.

For example, a particular composition of the present invention has as an impact drop height of 68 cm, whereas a prior art system has an impact drop height of 62 cm (see Examples below).

Thus, the composition of the present invention is further advantageous in that on curing it produces a coating having a good impact resistance.

The composition of the present invention is further advantageous in that on curing it produces a coating having a good peel resistance.

For example, the system according to the present invention has a good peel resistance as determined by the TEST PROTOCOL - 3 mentioned below.

Typically, the composition of the present invention will have a peel resistance of at least 20 N/25 mm, preferably at least 50 N/25 mm, preferably at least 80 N/25 mm, preferably at least 100 N/25 mm, preferably at least 150 N/25 mm (as determined by the TEST PROTOCOL - 3) depending on the particular needs for the adhesive.

For example, a particular composition of the present invention has a peel strength in the order of 187 N/25mm, whereas a prior art system has a peel strength of about 132 N/25mm.

The composition of the present invention is further advantageous in that on curing it produces a coating having a good load bearing/lap shear stress.

For example, the system according to the present invention has a good lap shear stress as determined by the TEST PROTOCOL - 2 mentioned below.

Typically, the composition of the present invention will have a lap shear stress of at least 2 MPa, preferably at least 5 MPa, preferably at least 10 MPa, preferably at least 15 MPa (as determined by the TEST PROTOCOL - 2) depending on the particular needs for the adhesive.

For example, the compositions of the present invention can yield lap shear stress values in excess of 15 MPa - and in some cases in excess of 25 MPa - on steel lap joints.

Thus, the composition of the present invention is further advantageous in that on curing it produces a coating having a good ability to withstand a combination of stress factors, as demonstrated by the excellent shear, peel and impact strengths.

Preferably, the composition of the present invention has a combination of an impact strength of at least 5 cm and a peel resistance of at least 20 N/25 mm and a lap shear stress of at least 2 MPa.

The modulus of the composition or polymer of the present invention may be selected depending on the application in which the composition or polymer is used.

The modulus of the composition or polymer may be high. The modulus of the composition or polymer may be medium. The modulus of the composition or polymer may be low.

The definitions of high, medium and low modulus have the following meanings.
High: Shear Modulus greater than 0.8 GPa
   Shear Modulus preferably from 1.0 to 4.0 GPa
   Shear Modulus preferably from 1.0 to 2.0 GPa
   Shear Modulus preferably from 1.3 to 1.7 GPa
   Shear Modulus preferably from 1.4 to 1.6 GPa
   Shear Modulus preferably approximately 1.5 GPa
Medium: Shear Modulus between 0.1 and 0.7 GPa
   Shear Modulus preferably from 0.1 to 0.5 GPa
   Shear Modulus preferably from 0.1 to 0.3 GPa
   Shear Modulus preferably from 0.1 to 0.2 GPa
   Shear Modulus preferably from 0.12 to 0.18 GPa
   Shear Modulus preferably from 0.13 to 0.17 GPa
   Shear Modulus approximately 0.15 GPa
Low: Shear Modulus less than 0.09 GPa
   Shear Modulus preferably from 0.08 to 0.01 GPa
   Shear Modulus preferably from 0.06 to 0.03 GPa
   Shear Modulus preferably from 0.06 to 0.04 GPa
   Shear Modulus preferably approximately 0.05 GPa

These shear moduli above are those measured according to the Thick Adherand Lap Shear Test.

The composition can be a one part formulation - e.g. the composition is ready to apply without the need to mix with another component. Alternatively, the composition can be formed from at least two parts - e.g. the final composition formulation is formed by mixing at least two parts of a formulation prior to application. Alternatively, different parts of the formulation may be applied to different substrates that are to be bonded. Preferably, the composition is formed by blending a two part formulation prior to application.

The term "curable" with regard to the composition of the present invention means that at least components (a) and (c) can form polymers under the appropriate curing conditions. These conditions will depend upon *inter alia* the choice of polymerisation initiator or initiators in the coating composition - such as exposure to radiation (preferably UV light), exposure to heat or exposure to anaerobic conditions. For example, and depending on the presence of other components, the composition may be cured by any one or more of: the presence of oxygen, the absence of oxygen, the application of a force, and the exposure to a light source, such as a UV light source, a redox initiator, heat, or other suitable means that generate or provide or prevent the suppression of indigenous free radicals.

The composition of the present invention is particularly suited for use as a coating.

The term "coating" includes the composition for use as any one or more of sealants, adhesives, encapsulants, potting agents, protective resins etc. In one preferred embodiment the coating is an adhesive.

The composition of the present invention may optionally contain any one or more additional additive components such as any one or more of fillers, free radical initiators, polymerisation initiators (such as actinic radiation polymerisation initiators, aerobic polymerisation initiators, anaerobic polymerisation initiators, thermal polymerisation initiators, and photosensitive polymerisation initiators), inhibitors, catalysts, thickeners, cross-linking agents, viscosity modifiers, chain terminators, stabilisers, thixotoping agents, accelerators, tackifiers, perfumes, dyes, chain transfer agents, pigments, binders, vehicles, coalescents, wetting agents, drying retarders, antifoaming agents, colorants, waxes, preservatives, heat stabilizers, solvents, anti-skinning agents, driers, fire retardants, smoke suppressants, surfactants, metal ions, salts, plasticizers, as well as additional polymerisable monomers, and other usual additive components.

The term "radiation" in relation to the polymerisation initiator covers any suitable polymerisation initiator that is activated by a suitable radiation source, such as any one or more of UV, visible, IR, α, β or γ radiation. In particular, it includes photosensitive polymerisation initiators. In some instances, it is preferably a UV polymerisation initiator. The photoinitiator may be of the free radical type, for example, those sold under the trade name IRGACURE: for example, either 2,2-dimethoxy-1,2-diphenylethane-1-one (Irgacure 651) or 1-hydroxycyclohexylphenylketone, or other similar compounds. However, cationic photoinitiators, e.g. the triaryl sulphonium salts, may also be effective.

The term "anaerobic" in relation to the polymerisation initiator covers any suitable polymerisation initiator that enhances or activates the polymerisation of monomers in the substantial absence of oxygen.

The term "aerobic" in relation to the polymerisation initiator covers any suitable polymerisation initiator that enhances or activates the polymerisation of monomers in the presence of oxygen.

The term "thermal" in relation to the polymerisation initiator covers any suitable polymerisation initiator that is activated by the application or exposure to heat - which can come from or be generated by any suitable source.

The catalysts that may be present in the compositions of the present invention can be any of the catalyst materials commonly used in the art. For example, tertiary amines and compounds containing a --CO--N < group may be used. Typical examples are N,N-dimethyl-p-toluidine, tri-n-butylamine, 2,diethylaminoethanol, N-methylformamide, phthalimide, succinimide, N-phenyl-2 propyl-3, 5-diethyl-1, 2-dihydropyridine (PDHP), o-benzoic sulphimide and dodecyl mercaptan.

As activators there will generally be used a compound capable of forming free radicals, either directly or indirectly, such compounds typically including peroxy compounds, e.g. peroxides, hydroperoxides and peresters, such as cyclohexylhydroxycyclohexyl peroxide, t-butyl hydroperoxide, t-butyl perbenzoate, hydrogen peroxide, cumene hydroperoxide, ethylene glycol dimethyl ether hydroperoxide and 2.5-dimethyl-2.5-di(t-butylperoxy)hexane.

The inhibitors that may be used in the coating compositions of the present invention include naphthaquinone, hydroquinones, sterically hindered phenols and nitroxides.

The polymerisation initiators may be incorporated into the composition at any suitable stage, but are preferably added following blending of the components (a) and (c).

The polymerisable monomer component (a) may be any one or more of the following polymerisable monomers: (meth)acrylic acid; alkyl(meth)acrylates (e.g. methyl (meth)acrylate, ethyl (meth)acrylate, butyl (meth)acrylate, 2-ethylhexyl (meth)acrylate, decyl (meth)acrylate, cyclohexyl (meth)acrylate, dodecyl (meth)acrylate, pentadecyl (meth)acrylate, cetyl (meth)acrylate, stearyl (meth)acrylate, eicosyl (meth)acrylate, isodecyl (meth)acrylate); alkoxy(polyethyleneoxide) (meth)acrylates; alkylphenoxy (polyethyleneoxide) (meth)acrylates (e.g. nonylphenoxy(ethyleneoxide) (meth)acrylate); primary alkenes (e.g. ethylene, octadecene, hexadecene, tetradecene, dodecene); vinyl esters of alkyl carboxylic acids; hydroxy alkyl (meth)acrylates (e.g. hydroxy propyl (meth)acrylate); other hydroxy (meth)acrylates (e.g. polypropylene glycol mono(meth)acrylate); (meth)acrylic acid esters with C₁ to C₁₈ alcohols; butadiene; substituted butadienes; styrene; substituted styrenes; vinyltoluene; vinyl pyridine; vinyl esters; vinyl stearate; vinyl acetate; vinyl chloride; vinylidene chloride; vinyl sulphonic acid; the nitriles and amides of (meth)acrylic acid; poly(meth)acrylate esters (e.g ethylene glycol di(meth)acrylate, diethylene glycol di(meth)acrylate, triethylene glycol di(meth)acrylate, neopentyl di(meth)acrylate and 1,1,1-trimethylol propane tri(meth)acrylate); maleic acid; maleic acid anhydride; itaconic acid; itaconic acid anhydride; fumaric acid; fumaric acid anhydride; crotonic acid; acrylonitrile; chloroprene; (meth)acrylic acid; (meth)acrylate functional silane; acid substituted (meth)acrylates (e.g. phosphoethyl (meth)acrylate and sulphoethyl (meth)acrylate); acid substituted (meth)acrylamides (e.g. 2-(meth)acrylamido-2-methylpropylsulfonic acid); basic substituted (meth)acrylates (e.g. amine substituted acrylates - such as dimethylaminoethyl (meth)acrylate, tertiarybutyl-aminoethyl (meth)acrylate); basic substituted (meth)acrylamides (e.g. amine substituted (meth)acrylamides - such as dimethylaminopropyl (meth)acrylamide); isobomyl (meth)acrylate; dicyclopentadienyl (meth)acrylate; dicyclopentadienyl oxyethyl (meth)acrylate; maleates; fumarates; including derivatives of such monomers such as epoxidised derivatives, for example glycidyl derivatives thereof (e.g. glycidyl (meth)acrylate).

As previously mentioned, the polymerisable monomer component (a) is one or more (meth)acrylate monomers and/or (meth)acrylic acid.

The term "(meth)acryl-" as used herein denotes methacryl- or and/or acryl-. Thus, for example: "(meth)acrylate monomers" means methacrylate monomers and/or acrylate monomers; and "(meth)acrylic acid" means methacrylic acid and/or acrylic acid.

Preferably the polymerisable monomer component (a) is one or more methacrylate monomers and/or methacrylic acid.

Preferred methacrylate monomers for component (a) are one or more of hydroxy propyl methacrylate, ethyl hexyl methacrylate, polypropylene glycol monomethacrylate, triethylene glycol dimethacrylate, methacrylic acid and methacrylate functional silane.

A preferred component (a) is a mixture of hydroxy propyl methacrylate, ethyl hexyl methacrylate, polypropylene glycol monomethacrylate, triethylene glycol dimethacrylate, and methacrylic acid.

Preferably, component (a) is in the presence of an adhesion promoter. Examples of adhesion promoters include silanes, titanates, zirconates; where functionality could be provided by a variety of groups such as amino, glycidyl, vinyl, etc. A preferred adhesion promoter is a methacrylate functional silane, such as γ - methacryloxypropyl trimethoxy silane.

The core/shell polymer component (b) does not dissolve in the composition formulation. The core/shell polymer may be any one or more of the core/shell polymers mentioned in EP-A-0532234, US-A-4876313, EP-A-0348565, US-A-3985703, US-A-3984497, US-A-4096202, US-A-4034013, US-A-4304709, US-A-3944631, US-A-4306040 and US-A-4495324. These documents provide teachings on how to prepare core/shell polymers. Essentially, core/shell polymers are formed by grafting a polymeric shell onto a polymeric core. Typically, a core would be a polymer of butadiene or ethyl acrylate; and the shell would be a polymer of methylmethacrylate or styrene. A preferred core is a methacrylate - butadiene - styrene core. A preferred shell is a polymethacrylate shell.

A preferred core/shell polymer is PARALOID™ EXL 2655 (supplied by Rohm and Haas Company).

The liquid polymerisable component (c) may be any suitable liquid polymerisable component capable of imparting toughness when the composition cures. Hence, the cured composition will be a toughened adhesive. The term "toughened adhesive "means an adhesive which by virtue of its physical structure discourages the propagation of cracks. This definition is in accordance with the definition of "toughened adhesive" presented in the February 1996 version of the draft European standard booklet EN 923:199X as compiled by the European Committee for Standardisation.

The polymerisable component (c) is a liquid at ambient temperature (such as 20°C. It is not a solid at ambient temperature (such as 20°C).

The polymerisable component (c) is not an elastomer. In other words, the polymerisable component (c) is not a macromolecular material which returns rapidly to approximately its initial dimensions and shape after substantial deformation by a weak stress and release of the stress at room temperature.

Preferably, the liquid polymerisable component (c) has a number average molecular weight of less than 8000, preferably less than 7000.

In a highly preferred aspect, the liquid polymerisable component (c) has a number average molecular weight of less than 8000, preferably less than 7000 and is flowable below 60°C.

Suitable polymerisable oligomers for component (c) have one or more of the following functional sites, which may be terminal and/or pendant: -CH=CH₂ (or a substituted derivative thereof); -OH; -COOH; -SH; -Br; -NCO; -NH₂; -NR₁R₂ (where each of R₁ and R₂ is independently selected from a suitable substituent - such as H, halo, hydroxy, alkyl (substituted or unsubstituted, linear or branched), aryl - and may be the same or different); -CH(O)CH₂; -C(O)-C(CH₃)=CH₂; -C(O)-C(H)=CH₂; SO₂Cl; and acid anhydride.

The oligomers can have one or more of the following backbones: butadiene; butadiene-acryl; butadiene-styrene; isoprene; isoprene-butadiene; isoprene-styrene; meth(acrylic) monomers; polyether; polyester-ether; glycidyl ether; epoxy resins; urethane; polysiloxanes; polyalkylene glycols; polyesters; ethylene; ethylene-alkylene; ethylene-vinyl acetate.

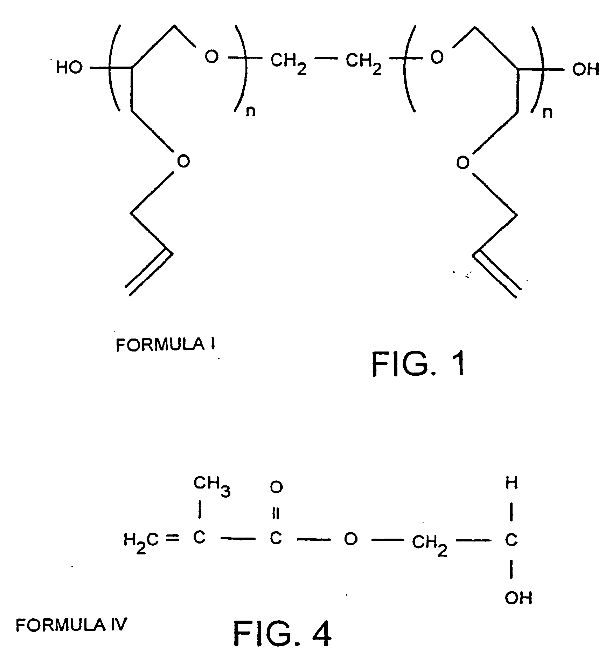

Examples of suitable allylglycidyl ether alcohol resin oligomers are of the Formula I (see Figure 1) - wherein each of n is a number such as a suitable integer (such as from 1 to 5) and may be the same or different. Preferably, each n is 5.

A suitable allylglycidyl ether alcohol resin oligomer is Santolink XI (supplied by Monsanto) - which has a viscosity (at 25°C) of 150 cPs and a molecular weight of 1200.

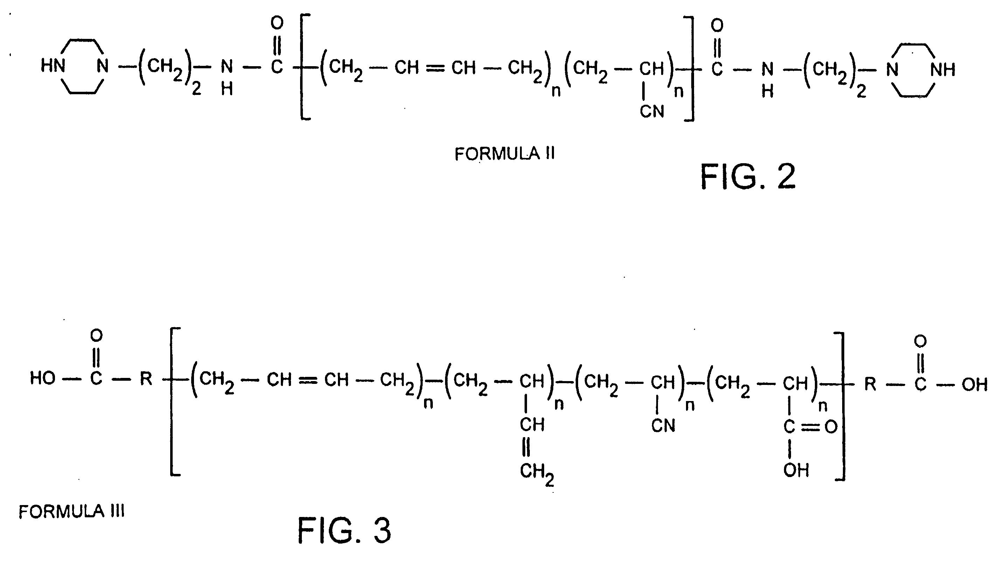

Examples of suitable amine functional butadiene-acrylonitrile oligomers are of the Formula II (see Figure 2) - wherein each of n is a number such as a suitable integer (such as from 1 to 5) and may be the same or different.

A suitable amine functional butadiene-acrylonitrile oligomer is Hycar ATBN 1300 x 21 - which has a Visc (at 27°C) of 160000 mPa.s and an AEW of 1200. This Hycar oligomer is supplied by BF Goodrich.

Examples of suitable carboxy functional butadiene oligomers and carboxy functional butadiene - acrylonitrile oligomers are of the Formula III (see Figure 3) - wherein each of R is independently selected from a suitable substituent - such as H, halo, hydroxy, alkyl (substituted or unsubstituted, linear or branched), aryl - and may be the same or different; and wherein each of n is a number such as a suitable integer (such as from 1 to 5) and may be the same or different.

Suitable carboxy functional butadiene oligomers and carboxy functional butadiene - acrylonitrile oligomers include Hycar CTB 2000 x 162 which has a Visc at 27°C of 60000 mPa.s and a COOH EPHR (equivalence per hundred of resin) value of 0.045 and a AN % of 0; Hycar CTBN 1300 x 8 which has a Visc at 27°C of 135000 mPa.s and a COOH EPHR value of 0.052 and a AN % of 17.5; and Hycar CTBNX 1300 x 18 which has a Visc at 27°C of 350000 mPa.s and a COOH EPHR value of 0.070 and a AN % of 21.5. These Hycar oligomers are supplied by BF Goodrich.

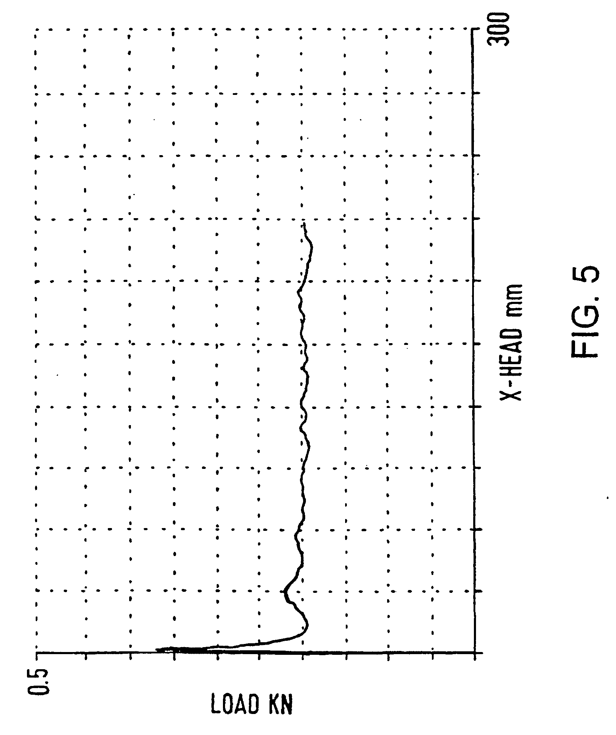

Examples of suitable methacrylate functional butadiene-acrylonitrile oligomers and functional butadiene oligomers have the functional group shown as Formula IV (see Figure 4).

Examples of suitable methacrylate functional butadiene-acrylonitrile oligomers and functional butadiene oligomers include Hycar VTBNX 1300 x 33 which has a Visc of 330000 mPa.s (at 27°C) and 17.5% AN (acrylonitrile); Hycar VTB 2000 x 168 which has a Visc of 111200 mPa.s (at 27 °C) and 0% AN; and Riacryl 3100 which has a Visc of 9500 mPa.s (at 55°C) and 0% AN and a MW of 5000. These oligomers are supplied by BF Goodrich and Ricon respectively.

Other suitable oligomers include: (1) adducts of liquid epoxy resin and Hycar CTBN - e.g. containing 5-50% Hycar CTBN. Examples include the Heloxy resins supplied by Wilmington Chemical Corp, such as Heloxy WC 8032 which is an adduct of diglycidyl ether of cyclohexane dimethanol with 50% Hycar 1300 x 8; and Heloxy WC 8034 which is an adduct of diglycidyl ether of neopentyl glycol with 50% Hycar 1300 x 8. (2) acrylate modified silicones (polysiloxanes), such as Albidur XP 01/774 supplied by Hanse Chemie and Ebacryl 1360 supplied by UCB. (3) hydroxy terminated butadiene - acrylonitrile oligomers. A suitable example is Hycar 1300 x 17 which is supplied by B.F. Goodrich and has a Visc of 140000 mPa.s (at 27°C) and 17% AN and 0.053 EPHR. (4) hydroxy terminated polybutadiene, such as Poly BD supplied by Atochem. (5) epoxy functional butadiene acrylonitrile, as supplied by B.F. Goodrich. (6) acrylate and methacrylate functional urethane oligomers, such as those supplied by Cray Valley or UCB. (7) acrylate and methacrylate functional polyalkylene glycols, such as those supplied by ISC. (8) acrylate and methacrylate functional epoxy oligomers, such as those supplied by Cray Valley. (9) functionalised polyesters, such as those supplied by UCB and Cray Valley. (10) functionalised liquid Kraton (as supplied by Shell), such as those oligomers that have epoxy or hydroxy functionality, and have any one of isoprene, butadiene, styrene, ethylene, alkylene backbones, and a Mol weight of from 4000 to 7000. (11) chlorosulphonated oligomers, such as chlorosulphonated functional ethylene or other alkylene, homo- or co-polymers, wherein other comonomers such as vinyl acetate can be present in the backbone. (12) Hycar CT oligomers supplied by B.F. Goodrich.

Preferred polymerisable components (c) include the polymerisable compounds mentioned above.

Preferred polymerisable components (c) include the polymerisable compounds having (meth)acrylate functionality and/or other polymerisable functionality (such as any one or more of the polymerisable monomers mentioned above).

Preferably, the polymerisable components (c) include polymerisable compounds having (meth)acrylate functionality and/or one or more butadiene groups and/or one or more acrylonitrile groups.

More preferably the polymerisable components (c) include polymerisable compounds having (meth)acrylate functionality and at least one butadiene group and at least one acrylonitrile group.

More preferably the polymerisable components (c) include polymerisable compounds having methacrylate functionality and a butadiene group and an acrylonitrile group.

Suitable polymerisable components (c) are oligomeric compounds from the liquid HYCAR™ range as supplied by B.F. Goodrich Chemical Co - such as HYCAR™ VTBNX, which is a polymerisable oligomer having methacrylate functionality and a butadiene group and an acrylonitrile group. Preferably, the liquid polymerisable component (c) is the oligomer HYCAR™ VTBNX.

An alternative, suitable polymerisable components (c) are compounds from the liquid Kraton™ range as supplied by Shell.

Other suitable components (c) are liquid, low molecular weight polymers such as Hycar MTBN (mercapto terminated butadiene/acrylonitrile, molecular weight Mn 3270, acrylonitrile content 19.4%) and Hycar ATBN (amino-terminated butadiene/acrylonitrile). Other compounds for use as component (c) include other carboxy, amino, vinyl or mercapto terminated butadiene and butadiene/acrylonitrile polymers, as well as urethanised polybutadienes and halogenated polybutadienes, e.g. brominated polybutadiene, butadiene-styrene copolymers, polyisoprenes and polychloroisoprenes all containing a reactive group or groups as specified. Also suitable are low molecular weight chlorosulphonated polyolefins, e.g. chlorosulphonated polyethylene.

The composition of the present invention is formulated from the components (a), (b) and (c), and optionally other components - such as fillers, initiators etc (see list provided herein for such optional components). The order of preparing the final composition will be apparent to those skilled in the art. The term "formulated" includes blended components. Preferably, the composition is prepared by blending the components.

Depending on the requirements of use of the composition, the components can be present in the following ranges:
polymerisable monomer (a): from 5% to 80%
core/shell polymer (b): from 2% to 50%
liquid polymerisable component (c): from 2% to 50%
wherein % is weight % of the total composition; and wherein any residual amount is made up with suitable additional component(s) such any one or more of fillers, free radical initiators, polymerisation initiators, catalysts, thickeners, viscosity modifiers, chain terminators, inhibitors, stabilisers, thixotoping agents, accelerators, tackifiers, dyes, chain transfer agents, pigments, binders, vehicles, coalescents, wetting agents, drying retarders, antifoaming agents, colorants, waxes, preservatives, heat stabilizers, solvents, anti-skinning agents, driers, surfactants, metal ions, salts, cross-linking agents, perfumes, fire retardants, smoke suppressants, plasticizers, as well as additional polymerisable monomers.

Preferably, the components are present in the following ranges:
polymerisable monomer (a): from 10% to 70%
core/shell polymer (b): from 5% to 40%
liquid polymerisable component (c): from 5% to 40%
wherein % is weight % of the total composition; and wherein any residual amount is made up with additional components such those mentioned above.

More preferably, the components are present in the following ranges:
polymerisable monomer (a): from 15% to 65%
core/shell polymer (b): from 10% to 30%
liquid polymerisable component (c): from 10% to 30%
wherein % is weight % of the total composition; and wherein any residual amount is made up with additional components such as those mentioned above.

In one preferred embodiment, the composition is an adhesive composition. The adhesive can be any one or more of an aerobic adhesive (i.e. sets in the presence of oxygen), an anaerobic adhesive (i.e. sets in the absence of oxygen such as a pressure sensitive adhesive), a pressure adhesive (i.e. sets on the application of a force), and a light curable adhesive (i.e. sets on exposure to radiation).

The present invention will now be described only by way of examples, in which reference shall be made to the following Figures:
Figure 5 which is a plot from a peel strength test; and
Figure 6 which is a plot from a rheological study.
[Figures 1-4 present general formulae and have been discussed above.]

In the following Examples reference is made to the following test Protocols.

### TEST PROTOCOL - 1

### FRACTURE TOUGHNESS/IMPACT RESISTANCE

In this Protocol, we measured fracture toughness by determining the impact resistance of two flat steel bars (laps) that are adhered together in a Maltese-cross configuration by the composition of the present invention or a comparative formulation. The results are expressed in terms of the height (in cm) at which a 260 g ball bearing when dropped will break the bond joining the laps so that they fall apart from each other.

In more detail: mild steel lap shear testpieces (10 cm x 25 cm x 3 mm), abraded and degreased, are bonded into a Maltese Cross shape. The bond line thickness of the adhesive is controlled using a 0.08 mm spacing wire (any adhesive fillet produced outside the bond area is cleaned away immediately after bonding). The bond area is clamped and cured for 24 hours at room temperature. The testpieces are then supported at their ends and a ball bearing of weight 260 g is dropped from a known height onto the bonded overlap. If the bond survives this height then the height from which the ball is dropped next is increased in 5 cm increments until the bond fails and the height quoted is the result. The start height being 20 cm. Three testpieces tested per adhesive.

### TEST PROTOCOL - 2

### LAP SHEAR STRENGTH

This Protocol was in accordance with British Standard Shear strength: BS5350: Part C5: 1990 (Bond strength in longitudinal shear). In this regard, the test was carried out on solvent degreased mild steel (100 mm x 2.5 mm x 1.5 mm), 12.5 mm x 25mm overlap, 0.08 mm bond line thickness control, 24 hour cure period at room temperature. The test was performed on Denison tensometer at 6 mm/minute crosshead separation.

### TEST PROTOCOL - 3

### PEEL STRENGTH

This Protocol was in accordance with British Standard T-peel Test: BS5350: Part C12: 1994 (180°C peel test for flexible to flexible bonded assemblies (T-peel test)). In short, the tests were on 1050A aluminium (150 mm x 26 mm x 1 mm), etched for 30 minutes in chromic acid (DTD915) using 0.08mm bond line thickness control. The adhesive was allowed to cure for 24 hours at room temperature. The test was performed on Denison tensometer, 50mm/min crosshead separation. Values of peel strength taken every 12mm (ignoring first 25mm) until seven readings obtained, mean value determined.

### EXAMPLE 1

A suitable, two-part formulation composition according to the present invention was prepared by blending together the following components:

| | **PART A** | **PART B** |
|---|---|---|
| COMPONENT (a) | | |
| hydroxy propyl methacrylate | 23.2% | 33.3% |
| ethyl hexyl methacrylate | 23.2% | 27.3% |
| polypropylene glycol monomethacrylate | 4.8% | - |
| triethylene glycol dimethacrylate | 1.0% | 1.0% |
| methacrylic acid | 9.3% | - |
| methacrylate functional silane | 1.9% | - |
| | | |

| COMPONENT (b) | | |
|---|---|---|
| | | |
| PARALOID EXL 2655 | 19.5% | 12.9% |

| COMPONENT (c) | | |
|---|---|---|
| HYCAR VTBNX | 9.5% | 15.4% |
| | | |

| ADDITIONAL COMPONENTS (d) | | |
|---|---|---|
| (d.i) Free Radical Initiators | | |
| Saccharin | 1.4% | - |
| t-butyl perbenzoate | 2.4% | - |
| N-phenyl-2 propyl-3,5 | - | 2.5% |
| -diethyl-1,2 dihydropyridine | | |
| | | |

| (d.ii) Stabiliser | | |
|---|---|---|
| DOW 331 (diglycidyl ether bisphenol A) | - | 4.1 % |
| | | |

| (d.iii) Thixotroping Agent | | |
|---|---|---|
| WACKER HDK N20 (fumed silica) | 3.8% | 3.4% |

### EXAMPLE 2

A suitable, two-part formulation composition according to the present invention was prepared by blending together the following components:

| | **PART A** | **PART B** | |
|---|---|---|---|
| | A | B | |
| Paraloid EXL 2655 | 15.4 | 12.8 | % |
| Methyl methacrylate | 49.9 | 27.0 | |
| Hydroxy propyl methacrylate | - | 33.0 | |
| Triethylene glycol dimethacrylate | 1.0 | 1.0 | |
| Polypropylene glycol monomethacrylate | 4.7 | - | |
| Methacrylic acid | 9.2 | - | |
| Silane A174 | 1.9 | - | |
| Saccharin | 1.4 | - | |
| Hycar VTBNX | 9.4 | 15.3 | |
| Dow 331 | - | 4.1 | |
| Wacker HDK N20 | 4.7 | 4.1 | |
| Tert-butyl hydroperoxide | 2.4 | - | |
| PDHP | - | 2.6 | |

### TESTS - 1

The composition of the present invention described in Example 1 was used as an adhesive to adhere together two flat steel bars - as described in the above Protocol.

As a comparative test, a formulation was prepared similar to the formulation mentioned in Example 1 but wherein the liquid polymerisable component (c) - i.e. the Hycar VTBNX - was substituted with a solid polymeric material - i.e. Hypalon. Likewise, this comparative formulation was used as an adhesive to adhere together two flat steel bars - as described in the above Protocol.

The applied compositions were allowed to cure over a period of 24 hours. The resultant bonded structures were then analysed for *inter alia* strength.

The results were as follows:

| | Lap shear strength | Peel Strength | Fracture toughness (Impact strength/drop height) |
|---|---|---|---|
| EXAMPLE I FORMULATION | at least 15 MPa | 187 N/25 mm | 68 cm |
| EXAMPLE 2 FORMULATION | 25.5 MPa | 273 N/25 mm | |
| COMPARATIVE FORMULATION | less than 15 MPa | 132 N/25 mm | 62 cm |

The results show that the composition of the present invention on curing produces a coating having good resistance to crack propagation.

In addition, the composition of the present invention on curing produces a coating having good fracture toughness.

Also, the composition of the present invention on curing produces a coating having good peel resistance.

Moreover, the composition of the present invention on curing produces a coating having good impact resistance.

In addition, the composition of the present invention on curing produces a coating having good load bearing.

Also, the composition of the present invention on curing produces a coating having a good ability to withstand stress.

Without wishing to be bound by theory, it is believed that some or all of these advantageous properties associated with the composition of the present invention are due to the presence of discrete, rubbery domains when the composition cures. The beneficial load bearing and/or stress bearing and/or crack propagation resistance associated with the cured compositions of the present invention are believed to be attributable (partially or completely) to these discrete domains.

### TESTS - 2

The composition of the present invention described in Example 1 was used as a coating to coat an electronic component located in a pit (which is another example of a "container") on an electrical board. The composition was totally cured within one hour. The cured composition formed a good protective covering for the electronic component, shielding it from water vapour and dust.

### TESTS - 3

A series of comparative tests were performed. In this regard, the composition of the present invention was compared with compositions that do not contain the monomer component (a), and compositions that do not contain core/shell polymer component (b) and compositions that do not contain the liquid polymerisable component (c).

### The formulations tested were as follows:

EX1 : The formulation presented in Example 1
- MO = The formulation presented in Example 1 but wherein the formulation does not contain the monomer component (a). In this formulation, the amounts of Paraloid EXL 2655 and Hycar VTBNX were increased in proportion to take into account the loss of the monomer component (a).
- LP = The formulation presented in Example 1 but wherein the formulation does not contain the oligomeric component Hycar VTBNX. In this formulation, the amounts of hydroxy propyl methacrylate, ethyl methacrylate and Paraloid EXL 2655 were increased in proportion to take into account the loss of the Hycar component.
- CS = The formulation presented in Example 1 but wherein the formulation does not contain the Paraloid EXL 2655 core/shell polymer component. In this formulation, the amounts of hydroxy propyl methacrylate, ethyl methacrylate and Hycar VTBNX were increased in proportion to take into account the loss of the Paraloid EXL 2655.

The results were as follows:

| | Impact cm | Peel N/25mm |
|---|---|---|
| EX1 | 68 | 187 |
| -LP | 27 | 0 |
| -CS | 25 | 69 |
| -MO | - | - |

| | | |
|---|---|---|
| - = physically almost impossible to mix and therefore could not be tested. | | |

The results show that the composition of the present invention on curing produces a coating having better resistance to crack propagation than the comparative examples.

In addition, the results show that the composition of the present invention on curing produces a coating having better fracture toughness than the comparative examples.

Also, the results show that the composition of the present invention on curing produces a coating having better peel resistance than the comparative examples.

Furthermore, the results show that the composition of the present invention on curing produces a coating having better impact resistance than the comparative examples.

The results also indicate a synergistic effect between the three essential components of the composition of the present invention. This result was highly surprising.

The peel test results also indicated that the compositions of the present invention produce a high peel initiation energy point (approximately 375 N/25 mm) before the steady state (approximately 200 N/25 mm). In this regard, see Figure 5. This result is unexpected and highly advantageous. With the composition of Example 1 the results even indicted that this initial adhesive peel strength is much greater than commonly used adhesives.

### TESTS - 4

A series of comparative tests were performed.

As a comparison, a formulation was prepared similar to the formulation mentioned in Example 1 but wherein the liquid polymeriseable component (c) - i.e. the Hycar VTBNX - was substituted with a solid polymeric material - i.e. Hypalon.

Tests were carried out on aluminium (5251) lap joints with minimal surface preparation of abrasion and degrease. It should be noted that in certain applications, eg. use in the aircraft industy, rigorous surface preparation techniques such as acid anodising may be carried out. This may assist in achieving long term durability, especially in hot, humid conditions.

| | | Example Formulation 1 | Comparative Formulation |
|---|---|---|---|
| Duration | Test Condition | Lap shear strength MPa | Lap shear strength MPa |
| 1000 hours | 23°C | 13.9 | 11.1 |
| | 40°C, 95 % relative humidity | 14.2 | 12.3 |
| | Diesel at 60°C | 6.6 | 4.1 |
| | Engine oil at 100°C | 13.3 | 14.6 |
| | Brake Fluid at 23°C | 12.0 | 12.4 |
| 2000 hours | 23°C | 13.6 | 13.0 |
| | 40°C, 95 % relative humidity | 12.7 | 12.9 |
| 4000 hours | 23°C | 12.3 | 12.5 |
| | 40°C, 95% relative humidity | 13.8 | 11.5 |

The results indicate that Example Formulation 1 performs in a very similar manner to the Comparitive Formulation in mild enviroments. However, in aggressive environments, such as diesel at 60°C, Example Formulation 1 outperforms the Comparative Formulation.

### RHEOLOGY STUDY

This example includes a series of experiments showing that the core/shell polymers act as rheology modifiers, especially for the compositions of the present invention.

The formulations tested were as follows:
FORM A = Part A of the formulation of Example 1 - but without the thixotroping agent - i.e. without fumed silica.
COMP A = Part A of the formulation of Example 1 - but without the core/shell polymer Paraloid EXL 2655 and without the thixotroping agent - i.e. without fumed silica.

In more detail:

### FORM A had the formulation of:

### FORM A

| | | |
|---|---|---|
| Paraloid EXL 2655 | 20.3 | % by weight |
| Triethylene glycol dimethacrylate | 1.1 | |
| Hycar VTBNX | 10.0 | |
| Saccharin | 1.4 | |
| Silane A174 | 1.9 | |
| Methacrylic acid | 9.2 | |
| Tert-butyl perbenzoate | 2.4 | |
| 2-ethyl hexyl methacrylate | 24.3 | |
| Hydroxy propyl methacrylate | 24.3 | |
| Polypropylene glycol monomethacrylate | 5.0 | |

### COMP A had the formulation of:

| | | |
|---|---|---|
| Triethylene glycol dimethacrylate | 1.0 | % by weight |
| Hycar VTBNX | 13.4 | |
| Saccharin | 1.4 | |
| Silane A174 | 1.8 | |
| Methacrylic acid | 9.2 | |
| Ten-butyl perbenzoate | 2.4 | |
| 2-ethyl hexyl methacrylate | 33.0 | |
| Hydroxy propyl methacrylate | 33.0 | |
| Polypropylene glycol monomethacrylate | 4.8 | |

The viscosity of these formulations were then measured at different shear rates using a Carrimed Rheometer.

As expected, the viscosity of the COMP A formulation was essentially of Newtonian behaviour, ie viscosity is substantially independent of shear rate (the "blip" at the start of the trace is an artefact of the machine start up).

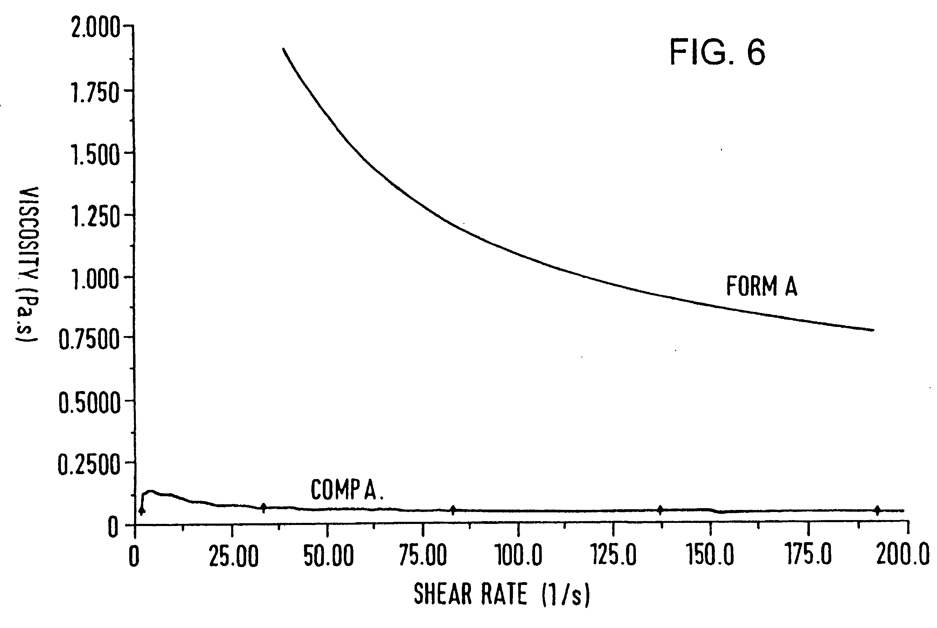

However, surprisingly, the viscosity of the FORM A formulation decreased under increasing shear rates (for example, see Figure 6). In this regard, the sample shows that an increase in viscosity is obtained with the addition of the core/shell polymer and, secondly, there was a viscosity reduction as the shear rate increased, i.e. shear thinning behaviour. These results were unexpected and thus serve to show that the core/shell polymer component can act as a rheology modifier. Thus, the present invention also provides the use of a core/shell polymer as a rheology modifier in an adhesive. In addition, the present invention provides the use of a core/shell polymer to increase the viscosity of a curable formulation prior to the cure thereof.

Further formulations in accordance with the present invention are as follows.

### EXAMPLE 3

A suitable, two-part formulation composition according to the present invention was perpared by blending together the following components.

| | **PART A** | **PART B** |
|---|---|---|
| Polypropylene Glycol Monoacrylate | 22.1 | 15.5 |
| Hydroxy Propyl Methacrylate | 18.3 | 12.8 |
| Ebecryl 8800* | 15.0 | 34.3 |
| Paraloid EXL2655 | 15.4 | 10.8 |
| Hycar VTBNX | 9.5 | 15.6 |
| Triethylene Glycol Dimethacrylate | 1.0 | 1.0 |
| Saccahrin | 1.4 | - |
| Diglycidyl Ether Bisphenol A | | 4.0 |
| Gamma-Methacryloxypropyl Trimethoxy Silane | 1.9 | - |
| Methacrylic Acid | 9.2 | - |
| Fumed Silica | 3.8 | 3.4 |
| Tertiary Butyl Perbenzonate | 2.4 | - |
| Reillat PDHP** | - | 2.6 |

| | | |
|---|---|---|
| * Urethane diacrylate ex UCB | | |
| ** ex Reilly Chemical | | |

### EXAMPLE 4

A suitable, two-part formulation composition according to the present invention was perpared by blending together the following components.

| | **PART A** | **PART B** |
|---|---|---|
| Hydroxy Propyl Methacrylate | 25.0 | 24.0 |
| Craynor 965* | 15.7 | 17.8 |
| Propoxylated Neopentyl Glycol Diacrylate | 15.7 | 17.8 |
| Paraloid EXL2655 | 14.8 | 14.0 |
| Hycar VTBNX | 9.5 | 15.4 |
| Triethylene Glycol Dimethacrylate | 1.0 | 1.0 |
| Saccahrin | 1.4 | - |
| Diglycidyl Ether Bisphenol A | | 4.0 |
| Gamma-Methacryloxypropyl Trimethoxy Silane | 1.9 | - |
| Methacrylic Acid | 9.2 | - |
| Fumed Silica | 3.4 | 3.4 |
| Tertiary Butyl Perbenzonate | 2.4 | - |
| Reillat PDHP** | - | 2.6 |

| | | |
|---|---|---|
| *Aliphatic urethane acrylate oligomer ex Cray Valley | | |
| ** ex Reilly Chemical | | |

### EXAMPLE 5

A suitable, two-part formulation composition according to the present invention was perpared by blending together the following components.

| | **PART A** | **PART B** |
|---|---|---|
| Hydroxy Propyl Methacrylate | 18.3 | 12.8 |
| Ebecryl 8800* | 15.0 | 34.3 |
| Alkyl Alkoxylated Methacrylate | 22.1 | 15.5 |
| Paraloid EXL2655 | 15.4 | 10.8 |
| Hycar VTBNX | 9.5 | 15.6 |
| Triethylene Glycol Dimethacrylate | 1.0 | 1.0 |
| Saccahrin | 1.4 | - |
| Diglycidyl Ether Bisphenol A | - | 4.0 |
| Gamma-Methacryloxypropyl Trimethoxy Silane | 1.9 | - |
| Methacrylic Acid | 9.2 | - |
| Fumed Silica | 3.8 | 3.4 |
| Tertiary Butyl Perbenzonate | 2.4 | - |

| | | |
|---|---|---|
| * Urethane diacrylate ex UCB | | |

### SUMMARY

1. The composition of the present invention can be used to provide a suitable coating.
2. The composition of the present invention can be used as a suitable adhesive.
3. Core/shell polymers can be used as rheology modifiers for adhesives.

The term "adhesive" means a substance that is a non-metallic substance capable of joining materials by surface bonding (adhesion) and the bond possessing adequate internal strength adhesion. This definition is in accordance with the definition of "adhesive" presented in the February 1996 version of the draft European standard booklet EN 923:199X as compiled by the European Committee for Standardisation.

## Claims

1. A curable composition comprising.
(a) a polymerisable monomer;
(b) a core/shell polymer; and
(c) a liquid polymerisable component capable of imparting toughness on the polymerisation thereof;
wherein polymerisable monomer (a) is one or more (meth)acrylate monomers and/or (meth)acrylic acid; wherein polymerisable monomer (a) is different to polymerisable component (c) and wherein liquid polymerisable component (c) is an oligomer, flowable below 60°C and has a number average molecular weight of less than 10,000, and which can have one or more of the following functional sites, which may be terminal and/or pendent: -CH=CH₂ (or a substituted derivative thereof); -OH; -COOH; -SH; -Br; -NCO; -NH₂; -NR₁R₂; -CH(O)CH₂; -C(O)-C(CH₃)=CH₂; -C(O)-C(H)=CH₂; SO₂Cl and acid anhydride,
wherein each of R₁ and R₂ may be the same or different and is independently selected from hydrogen; halo; hydroxy; substituted, unsubstituted, linear or branched alkyl and aryl.

2. A curable composition according to claim 1, wherein the composition when cured is load bearing and/or capable of withstanding stress.

3. A curable composition according to claim I or claim 2, wherein the composition is formed from a two-part formulation.

4. A polymeric material formed from the polymerisation of a curable composition according to any one of claims 1 to 3.

5. A bonded assembly comprising a first surface bonded to a second surface by a polymeric material according to claim 4.

6. A sealed assembly comprising a first surface sealed to a second surface by a polymeric material according to claim 4.

## Patentansprüche

1. Härtbare Zusammensetzung, die
a) ein polymerisierbares Monomer,
b) ein Kern-/Hüllenpolymer und
c) eine flüssige polymerisierbare Komponente, die bei ihrer Polymerisation Zähigkeit verleihen kann, bereitstellt,
worin das polymerisierbare Monomer (a) ein oder mehrere (Meth)acrylatmonomere und/oder (Meth)acrylsäure ist, polymerisierbares Monomer (a) von polymerisierbarer Komponente (c) verschieden ist und flüssige polymerisierbare Komponente (c) ein Oligomer ist, das unter 60 °C fließfähig ist und ein mittleres Molekulargewicht (Zahlenmittel) geringer als 10.000 hat und ein oder mehrere der folgenden funktionellen Stellen haben kann, die Endgruppen und/oder Seitengruppen sein können: -CH=CH₂ (oder ein substituiertes Derivat hiervon), -OH, -COOH, -SH, -Br, -NCO, -NH₂, -NR₁R₂, -CH(O)CH₂, -C(O)-C(CH₃)=CH₂, -C(O)-C(H)=CH₂, SO₂Cl und Säureanhydrid,
wobei jedes R₁ und R₂ gleich oder verschieden sein kann und unabhängig davon Wasserstoff, Halogen, Hydroxy, substituiertes, unsubstituiertes, lineares oder verzweigtes Alkyl und Aryl bedeutet.

2. Härtbare Zusammensetzung nach Anspruch 1, worin die Zusammensetzung, wenn gehärtet, tragfähig und/oder widerstandsfähig gegen Spannung ist.

3. Härtbare Zusammensetzung nach Anspruch 1 oder Anspruch 2, worin die Zusammensetzung aus einer Zweikomponentenformulierung besteht.

4. Polymermaterial, gebildet aus der Polymerisation einer härtbaren Zusammensetzung nach einem der Ansprüche 1 bis 3.

5. Gebundene Anordnung mit einer ersten Oberfläche, die an eine zweite Oberfläche mit Hilfe eines Polymermaterials nach Anspruch 4 gebunden ist.

6. Abgedichtete Anordnung, die eine erste Oberfläche, welche dichtend an eine zweite Oberfläche mit Hilfe eines Materials nach Anspruch 4 gebunden ist.

## Revendications

1. Composition durcissable comprenant :
(a) un monomère polymérisable ;
(b) un polymère à noyau/enveloppe ; et
(c) un constituant polymérisable liquide capable de conférer une ténacité lors de sa polymérisation ;
dans laquelle le monomère polymérisable (a) consiste en un ou plusieurs monomères (méth)acrylate et/ou acide (méth)acrylique ; le monomère polymérisable (a) est différent du constituant polymérisable (c), et le constituant polymérisable liquide (c) est un oligomère apte à l'écoulement à une température inférieure à 60°C, et possède une moyenne en nombre du poids moléculaire inférieure à 10 000, et peut comprendre un ou plusieurs des sites fonctionnels suivants, qui peuvent être terminaux et/ou appendus : -CH=CH₂ (ou un de ses dérivés substitués) ; -OH ; -COOH ; -SH ; -Br ; -NCO ; -NH₂ ; -NR₁R₂ ; -CH(O)CH₂ ;
où les groupes R₁ et R₂ peuvent être identiques ou différents et sont choisis chacun indépendamment entre un atome d'hydrogène ; un groupe halogèno ; un groupe hydroxy ; des groupes alkyle linéaires ou ramifiés et aryle, substitués ou non substitués.

2. Composition durcissable suivant la revendication 1, ladite composition, une fois durcie, étant une composition porteuse de charge et/ou capable de résister à une tension.

3. Composition durcissable suivant la revendication 1 ou la revendication 2, ladite composition étant formée à partir d'une formulation en deux parties.

4. Matière polymère formée par polymérisation d'une composition durcissable suivant l'une quelconque des revendications 1 à 3.

5. Assemblage lié comprenant une première surface liée à une seconde surface par une matière polymère suivant la revendication 4.

6. Assemblage joint hermétiquement, comprenant une première surface jointe hermétiquement à une seconde surface par une matière polymère suivant la revendication 4.
